## Europäisches Patentamt

## European Patent Office

## Office européen des brevets

(11) Veröffentlichungsnummer: **0 037 530**
**A2**

(12) **EUROPÄISCHE PATENTANMELDUNG**

(21) Anmeldenummer: **81102287.0**

(22) Anmeldetag: **26.03.81**

(51) Int. Cl.³: **G 01 C 11/02**
**G 03 B 37/00, H 04 N 7/18**
**B 64 D 47/08**

(30) Priorität: **01.04.80 DE 3012601**

(43) Veröffentlichungstag der Anmeldung:
**14.10.81 Patentblatt 81/41**

(84) Benannte Vertragsstaaten:
**FR GB NL**

(71) Anmelder: **Deutsche Forschungs -und Versuchsanstalt für Luft-und Raumfahrt e.V.**
**Linder Höhe**
**D-5000 Köln 90(DE)**

(72) Erfinder: **Lorenz, Dieter**
**Nordstrasse 21**
**D-8126 Hohenpeissenberg(DE)**

(74) Vertreter: **Endlich, Fritz, Dipl.-Phys.**
**Postfach**
**D-8034 Germering(DE)**

(54) Verfahren und Einrichtung zur zeilenweisen Aufnahme von Gegenständen.

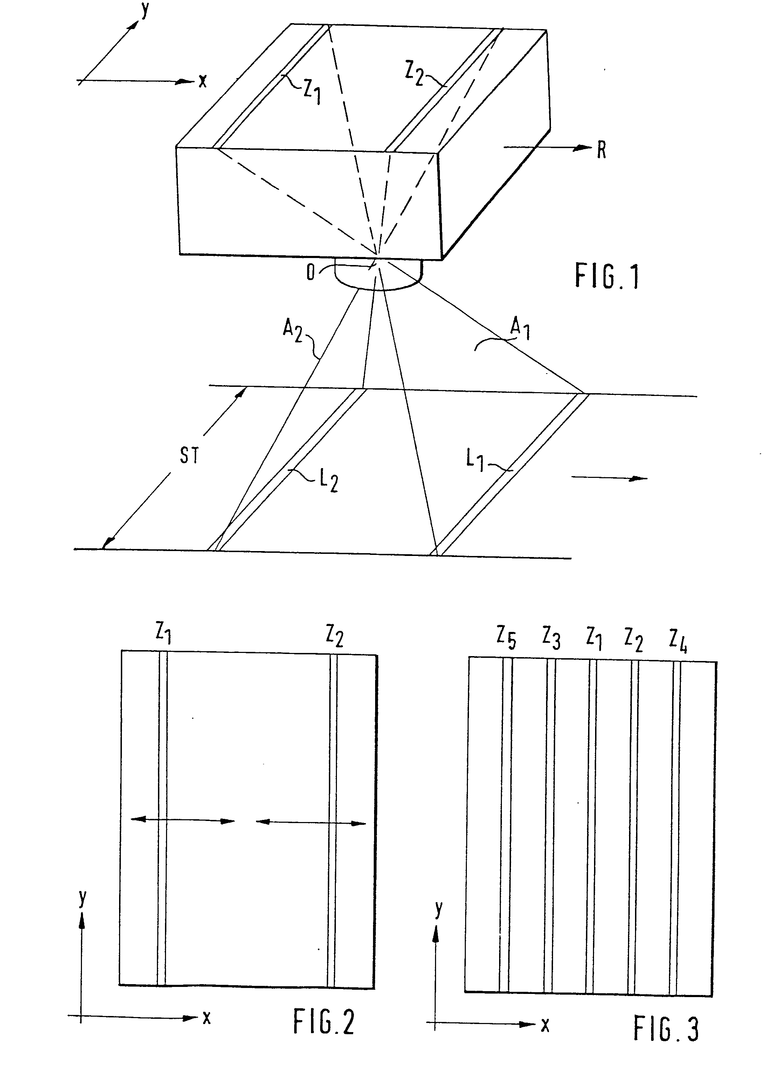

(57) Es wird ein Verfahren zur zeilenweisen Aufnahme von Gegenständen von Luftfahrzeugen oder Satelliten aus beschrieben, bei dem die Aufnahme in mehreren, gegeneinander geneigten Ebenen erfolgt. Ohne die Verwendung mechanisch bewegter Teile werden in der Bildebene eines einzigen abbildenden Objektivs mindestens zwei Zeilen quer zur Fortbewegungsrichtung, vorzugsweise senkrecht zur Fortbewegungsrichtung gleichzeitig abgebildet und aufgenommen. Die Einrichtung zur Durchführung des Verfahrens weist ein einziges abbildendes Objektiv auf, in dessen Bildebene mindestens zwei zeilenförmige Detektoranordnungen angeordnet sind (Fig. 1).

FIG.1

EP 0 037 530 A2

Verfahren und Einrichtung zur zeilenweisen Aufnahme von
Gegenständen

Die Erfindung betrifft ein Verfahren zur zeilenweisen Aufnahme
von Gegenständen entsprechend dem Oberbegriff des Patentanspruchs 1, sowie eine Einrichtung zur Durchführung dieses Verfahrens.

Die zeilenweise Abtastung von Gegenständen, z.B. der Erdoberfläche und/oder der über ihr befindlichen Wolken im Sichtbaren,
im nahen Infrarot und/oder thermalen Infrarot, von Luftfahrzeugen oder Satelliten aus, zur Gewinnung von Meßdaten und zur Bilderzeugung, wird heute meist mit optisch-mechanischen Zeilenabtastern durchgeführt, wobei die Abtastung quer zur Flugrichtung
erfolgt. Durch die Fortbewegung des Geräteträgers wird bei entsprechender Abstimmung von Fluggeschwindigkeit, Flughöhe und
Öffnungswinkel des optischen Systems eine lückenlose Abtastung
eines Streifens, z.B. der Erdoberfläche ermöglicht. Ein Nachteil dieser bisher bekannten Geräte ist darin zu sehen, daß
sie mechanisch bewegte Teile wie Drehspiegel oder Schwingspiegel besitzen. Es sind auch Geräte bekannt, die ohne mechanisch
bewegte Teile auskommen (DE-AS 21 06 268, DE-OS 23 63 407;
Bildmessung und Luftbildwesen 40, 47 - 55 (1972) und 47, 33 - 40
(1979)). Bei ihnen wird meist eine Abtastzeile durch eine Optik auf einen selbstabtastenden Zeilendetektor abgebildet, bei dem jedem Bildpunkt ein eigenes Detektorelement zugeordnet ist. Für die Abtastung in zwei oder mehreren gegeneinander geneigten Ebenen insbesondere für stereoskopische Aufnahmen, aber auch zur Gewinnung zusätzlicher Informationen für die Fernerkundung (Bildmessung und Luftbildwesen 43, 76 - 77 und 117 - 120 (1975)) ist es ferner bereits bekannt, mehrere getrennte derartige Geräte zu verwenden.

Diese Lösung des Problems ist jedoch mit einigen Nachteilen behaftet. Insbesondere wird für jede Abtastebene ein komplettes Gerät benötigt, dessen Brennweite zur Erzielung gleicher Abbildungsmaßstäbe von der Neigung der Abtastebene gegen die Lotrechte abhängt. Für die Einstellung des Neigungswinkels der Abtastebene muß jedes dieser Geräte für sich genau ausgerichtet werden (äußere Orientierung).

Es ist deshalb Aufgabe der Erfindung ein Verfahren der eingangs genannten Art und eine Einrichtung zur Durchführung dieses Verfahrens unter möglichst weitgehender Vermeidung der genannten Nachteile und Schwierigkeiten derart zu verbessern, daß die Abtastung in zwei oder mehreren, gegeneinander geneigten Abtastebenen mit einem einzigen System durchgeführt werden kann, daß insbesondere auch Aufnahmen großer Streifenbreiten ermöglicht. Diese Aufgabe wird bei einem Verfahren der eingangs genannten Art erfindungsgemäß durch den Gegenstand des Patentanspruchs 1 gelöst. Eine Einrichtung zur Durchführung des Verfahrens und vorteilhafte Weiterbildungen dieser Einrichtung sind Gegenstand der Unteransprüche.

Bei einer derartigen Einrichtung gemäß der Erfindung können deshalb zwei oder mehr zeilenförmige Detektoranordnungen in der Bildebene eines einzigen Objektivs so angeordnet werden, daß eine gleichzeitige Abtastung in zwei oder mehreren zueinander geneigten Abtastebenen durchführbar ist, ohne daß die Verwendung mechanisch bewegter Teile wie rotierender Spiegel oder dergleichen erforderlich ist. Für die Einstellung der Neigung der Abtastebenen gegen die Lotrechte können die Detektoranordnungen, die z.B. Zeilensensoren sein können, in der Bildebene des Objektivs entweder fest oder verschiebbar angeordnet sein, wobei eine Verschiebung nur in Flugrichtung erfolgen kann und die Detektoranordnungen stets parallel zueinander stehen.

Die mit der Erfindung erzielten Vorteile bestehen insbesondere darin, daß statt zweier oder mehrerer Objektive genau gleicher oder genau vorgegebener Weise aufeinander abgestimmter Brennweiten und sonstigen optischen Eigenschaften nur ein Objektiv erforderlich ist. Die Anforderungen an das Objektiv bezüglich des nutzbaren Bildkreisdurchmessers sind dabei, insbesondere auch bei Weitwinkelaufnahmen, wie sie für die Aufnahmen von Wolken in der Regel erforderlich sind, nur unwesentlich größer als bei den mit nur einer Bildzeile ausgestatteten Geräten. Die Neigung des Abtastebenen gegen die Lotrechte und gegeneinander kann im System entweder eingestellt werden oder herstellungsseitig fest vorgegeben werden, so daß die Justierung von zwei getrennten Systemen (äußere Orientierung) entfällt. Werden wahlweise unterschiedliche Neigungswinkel der Abtastebenen benötigt, so lassen sich diese durch den festen Einbau der entsprechenden Zahl von z.B. Zeilensensoren erreichen, von denen nur die jeweils benötigten zur Bildaufzeichnung herangezogen werden.

Anhand der Zeichnung soll die Erfindung beispielsweise näher erläutert werden. Es zeigen:

Fig. 1 eine schematische perspektivische Darstellung einer Einrichtung zur Durchführung des Verfahrens gemäß der Erfindung;

Fig. 2 eine Aufsicht auf die Bildebene in Fig. 1, in der zwei zeilenförmige Detektoranordnungen verstellbar angeordnet sind; und

Fig. 3 eine Aufsicht auf die Bildebene in Fig. 1 mit 5 fest eingebauten zeilenförmigen Detektoranordnungen.

Fig. 1 zeigt eine Kamera mit zwei Zeilendetektoren $Z_1$ und $Z_2$, die in der Bildebene eines einzigen Objektivs O angeordnet sind. Die Zeilendetektoren können aus einer Anzahl diskreter Detektoren bestehen, beispielsweise aus Halbleiterdetektoren, die in einer Zeile angeordnet sind. Detektoren dieser Art sind an sich bekannt (Bildmessung und Luftbildwesen 47, 23 - 40 (1979)). Durch das Objektiv O werden zwei Zeilen $L_1$ und $L_2$ der aufzunehmenden Gegenstände auf die Zeilendetektoren $Z_1$ und $Z_2$ abgebildet (Abtastebenen

$A_1$ und $A_2$). Durch kontinuierliche, zeilenweise Aufnahme während der Fortbewegung der Kamera relativ zum aufzunehmenden Gegenstand in Pfeilrichtung R wird z.B. die Erdoberfläche in Streifenbreite ST zweifach in den Abtastebenen $A_1$ und $A_2$ abgetastet. Die Neigung der beiden oder gegebenenfalls von mehreren Abtastebenen zur Lotrechten wird durch die Lage der Zeilendetektoren bestimmt.

Bei dem in Fig. 2 dargestellten Ausführungsbeispiel sind die beiden Zeilendetektoren $Z_1$ und $Z_2$ mechanisch verstellbar derart angeordnet, daß jeder Zeilendetektor in x-Richtung verschiebbar ist, wie durch die beiden Pfeile in Fig. 2 angedeutet ist. Es ist jedoch nicht notwendig, daß die Zeilendetektoren symmetrisch zur optischen Achse liegen.

Bei dem in Fig. 3 dargestellten Ausführungsbeispiel sind mehrere fest eingebaute Zeilendetektoren vorgesehen, beispielsweise fünf Zeilendetektoren $Z_1$ - $Z_5$. Die Zeilendetektoren können zusammen für die Abtastung in fest vorgegebenen Abtastebenen verwendet werden. Es ist jedoch auch möglich, nur einen oder einige der Zeilendetektoren für eine Abtastung zu verwenden. Zu diesem Zweck ist eine Einrichtung zum Anschalten der betreffenden Zeilendetektoren vorgesehen. Beispielsweise können mit den Zeilendetektoren $Z_2$ und $Z_3$, die symmetrisch zur optischen Achse liegen, Konvergentaufnahmen mit einem relativen kleinen Konvergenzwinkel, und mit den Zeilendetektoren $Z_4$ und $Z_5$ Aufnahmen mit einem entsprechenden größeren Konvergenzwinkel gemacht werden. Die Benutzung des Zeilendetektors $Z_1$ in Fig. 3 entspricht der in der Lotrechten befindlichen Abtastebene.

Patentansprüche

1. Verfahren zur zeilenweisen Aufnahme von Gegenständen von einem Geräteträger aus, der sich relativ zu diesen Gegenständen bewegt, bei dem die Aufnahme in mehreren, gegeneinander geneigten Ebenen erfolgt, d a d u r c h   g e k e n n z e i c h n e t ,  daß in der Bildebene eines einzigen abbildenen Objektivs mindestens zwei Zeilen quer zur Fortbewegungsrichtung, vorzugsweise senkrecht zur Fortbewegungsrichtung des Geräteträgers gleichzeitig ohne die Verwendung mechanisch bewegter Teile abgebildet und aufgenommen werden.

2. Einrichtung zur Durchführung des Verfahren gemäß Anspruch 1 zur zeilenweisen Aufnahme von Gegenständen von einem Geräteträger aus, der sich relativ zu diesen Gegenständen bewegt, mit der die Aufnahmen gleichzeitig in mehreren, gegeneinander geneigten Ebenen erfolgt, d a d u r c h   g e k e n n z e i c h n e t ,  daß in der Bildebene eines einzigen abbildenden Objektivs (O) mindestens zwei zeilenförmige Detektoranordnungen ($Z_1$, $Z_2$) angeordnet sind.

3. Einrichtung nach Anspruch 2, d a d u r c h   g e k e n n z e i c h n e t ,  daß der Abstand der zeilenförmigen Detektoranordnungen ($Z_1$, $Z_2$) in Fortbewegungsrichtung (R) des Geräteträgers zwecks Änderung des Neigungswinkels der Abstastebenen ($A_1$, $A_2$) mechanisch veränderbar ist.

4. Einrichtung nach Anspruch 2, d a d u r c h  g e k e n n - z e i c h n e t,  daß mindestens drei zeilenförmige Detektoranordnungen ($Z_1$ - $Z_5$) fest eingebaut sind, die zusammen oder wahlweise entsprechend fest vorgegebenen Neigungen der zugeordneten Abtastebenen anschaltbar sind.

FIG.1

FIG.2

FIG.3